# EUROPEAN PATENT SPECIFICATION

(11) **EP 3 548 377 B1**
(45) Date of publication and mention of the grant of the patent: **04.08.2021**
(21) Application number: 17805180.1
(22) Date of filing: 27.11.2017
(51) Int. Cl.: B64C 29/00, B64C 27/82, B64C 27/26, B64C 27/28

(54) **ELECTRICAL VERTICAL TAKE-OFF AND LANDING AIRCRAFT**
VERTIKAL STARTENDES UND LANDENDES ELEKTRISCHES FLUGZEUG
AÉRONEF ÉLECTRIQUE À DÉCOLLAGE ET ATTERRISSAGE VERTICAUX

(30) Priority: 29.11.2016 EP 16201031; 25.01.2017 US 201762450299 P
(43) Date of publication of application: 09.10.2019
(73) Proprietor: Pfammatter, Thomas, 3930 Visp (CH); Steffen, Dominique, 3900 Brig (CH)
(72) Inventor: DEMONT, Sébastien, 1950 Sion (CH); PFAMMATTER, Thomas, 3930 Visp (CH); STEFFEN, Dominique, 13900 Brig (CH)
(74) Representative: Bovard SA Neuchâtel
(86) International application number: PCT/EP2017/080511
(87) International publication number: WO 2018/099856

(56) References cited:
- WO-A1-2010/123601
- WO-A1-2015/200345
- US-A- 3 049 320
- US-A1- 2008 169 375
- US-A1- 2009 189 011
- US-A1- 2012 104 157
- US-A1- 2013 092 799
- US-A1- 2016 311 522
- US-B1- 7 147 182

## Description

### Technical field

The present invention relates to the field of airborne and flying vehicles. More specifically it relates to an electrically powered aircraft having vertical take-off and landing as well as stationary flight capabilities.

### Background

Currently available vertically capable aircraft, also known as vertical take-off and landing (VTOL) aircraft are generally denied permission for routine powered terminal operations (e.g. take-off, low altitude climb, landing, etc.) in populated, built-up areas for one or more of four reasons: safety, noise, exhaust emissions, or outwash velocity. Further, current rotary-wing VTOLs, except for very advanced tilt rotor aircraft, cannot compete with similar payload-class, fixed-wing, propeller-driven aircraft in speed and range when unrestricted expansive take-off and landing facilities and climb corridors are conveniently available at both ends of a mission. So the simultaneous attainment of radically improved terminal safety, tolerable noise and fumes, modest outwash velocity and competitive fixed-wing speeds, efficiencies, and ranges would enable rotary-wing aircraft to dominate the current light aircraft market, subject to price differentials, and open up the vast denied market for terminal operations in built-up areas. Two other factors, though not essential to correct the above rotary-wing shortfalls, add to the market expansion potential for the subject electrically-powered propeller craft: (1) independence from logistically burdensome fuels (e.g., JP, H₂, etc.) at light-duty bases, particularly in built-up areas, and (2) fully autonomous flight control/management to relieve the stiff requirement for specialized pilot proficiency, thus eliminating another disincentive for vertical aircraft ownership/operation.

Although numerous low-performance electric fixed-wing aircraft have been built, the only widely publicized claims to an electric tilt rotor aircraft are made by FALX AIR™ Hybrid Tilt Propeller. To the degree that popular descriptions are accurate: (1) the configuration is a low aspect ratio tilt-wing, not a tilt-propeller; (2) the batteries in the FALX AIR are supplemental to the internal combustion engine to assist Hover-Out-of-Ground-Effect (HOGE) and climb and do not provide separate full HOGE power; hence, the FALX AIR lacks fully redundant power in the dead man zone for silent, safe take-off and landing in built-up areas; (3) the dual electric motors/nacelle are insufficient at this moderately high disk loading to supply HOGE with one-propulsion-motor- inoperative (OPMI), thus severely compromising safety in built-up areas; and (4) the FALX AIR makes no pretence of basing-independence allowing all-electric operation for basing in the absence of conventional logistic fuels.

Another concept has been patented from Kuhn Ira, where he claims to invent an electric tiltrotor aircraft. This aircraft however is controlled like regular tiltrotor aircrafts. So steering will be done by the at least 2 rotors in place for roll, pitch and yaw steering - similar to helicopters. These concepts are highly complicated and expensive to develop and produce as you need helicopter systems.

Similarly, the Aurora Flight Science's™ Excalibur concept VTOL electric hybrid is not a tilt-propeller configuration, but rather a direct thrust turbofan, 70% of vertical lift, with supplemental electric ducted fan lift during HOGE.

Four recent advances in disparate technologies can synergize to enable efficient electric tilt-rotor VTOL aircraft. Tilt-rotor aerodynamic, structural, and propulsive efficiencies have improved. Extremely flight-efficient tilt-rotor aircraft, far beyond the V-22's anaemic lift-to-drag ratio, low propulsion efficiency, and high structural weight fraction result in more than 2 times the V-22's specific payload/times/range. Electric motor power densities have increased. High-performance, light-weight electric motors and generators can have more than three times the power-density of motors being introduced in electrically propelled automobiles. Battery energy densities have also increased and can provide specific energy densities of 100, 200, 300, or even up to 400 W-h/kg (watt-hour per kilogram). Furthermore, autonomous flight control and management systems have dramatically improved. For example, autonomous flight control and route/ATC management with pilot override, which allow for totally autonomous flight from take-off to landing have been demonstrated in the A-160 Hummingbird.

All of the above individual subsystem elements for a new electrically-powered tilt-rotor VTOL (E-VTOL) have already been separately demonstrated: (1) Hardware has been demonstrated with prototypes of very high performance electric motors/generators, small/light/low-sfc turbines, moderately high performance lithium batteries, variable speed rigid propellers, light weight all-carbon structures, and autonomous flight/management of rotary wing VTOLs. (2) Extensive vetting by independent parties of related aerodynamically efficient tilt- propeller airframe designs (though not with electric propulsion architectures) has testified as to the practicality of the assumed aerodynamics and weights. (3) Finally, the very high-performance lithium batteries necessary for the purebred battery electric architectural variant are at the bench chemistry stage within the National labs and less visibly with private firms, thus developable with expected vigour.

What has yet to be appreciated is that the above advances can now be combined to realize many new capabilities that address issues with the known art. The contemplated E-VTOL aircraft have tolerable noise, zero emissions, or acceptable outwash velocity necessary for powered terminal operations in populated, built-up geography. An E-VTOL aircraft has vertical flight safety improvements to bring rotary-wing aircraft into parity with fixed-wing competitors (e.g., factor of 10 reductions in accidents per flight-hour) and makes vertical flight politically compatible with terminal operations in built-up areas, such as elimination of the "dead man's zone". Electrically- powered, vertically-capable aircraft can have market-competitive speed and range relative to current personal, executive, light cargo, public safety, and military fixed-wing, propeller-driven aircraft below 9'071 kg (20'000 lb) gross weight. Such aircraft also have the benefit of basing-independence from conventional on-site liquid fossil fuel support for short range operations where only electrical power would likely be required for recharging batteries. The aircraft also have naturally low infra-red and acoustic signature in terminal operations where combat threats are most prevalent. Contemplated designs also eliminate a requirement for a two-speed gearbox or mechanical cross shafting that would ordinarily be necessary for optimized vertical lift, horizontal cruise propeller RPM, and safe vertical terminal operations when separate propeller nacelles are driven by conventional turbine engine mechanical drive trains. Designs can also include non-tilting back-up and/or secondary engines in the electric hybrid which avoid lubrication problems and engine design specialization in typical "engine-in-nacelle" tilt-propeller aircraft.

Additionally electric hybrid VTOL (E-VTOL) have a wide flexibility in choice of back-up and/or secondary energy source types or sizes within the same airframe to suit the desired cruise speed and altitude with no change in propeller electric drive motors which are sized for vertical flight and hence over-powered for all but highest speed cruise.

The above advanced capabilities can be achieved using multiple electric motors to drive each propeller through one or more fixed reduction gearboxes and a choice of at least two power supply architectures, all of which enable full redundancy in both propeller drive motors and electric power supply for safe, hover-out-of-ground- effect (HOGE) in built-up areas. All two are purely electric during quiet, emission-free operations in built up areas. A heavy hybrid can be entirely electric, hence basing-independent, for short range operations (e.g., less than 92,6 km (50 nautical miles)). A purebred battery architecture can be innately all-electric for full flight range (e.g_{.}, greater than 370,4 km (200 nm)). A light hybrid offers full range (e.g., on the order of 1852 km (1000 nm)) flight, but can require traditional logistic fuel availability under normal basing conditions even though it retains quiet, safe, all-electric terminal operations capability. All designs benefit from fully autonomous flight control with pilot override to reduce or eliminate pilot skill requirements and further improve safety of this inherently complex vertical lift aircraft.

US 3,049,320 discloses a VTOL aircraft comprising a cockpit, fuel powered tilt wings and rotors/propeller units. No purely electric VTOL aircraft is disclosed. Moreover, the disclosed aircraft comprises an air-blowing steering system which is configured to blow air in all directions. Therefore, no smooth control during stationary hovering phases, vertical take-off and landing phases as well as pitch steering of the aircraft to engage forward flying thereof can be obtained.

WO 2010/123601 discloses an electrically powered VTOL aircraft which includes one or more electrical energy stores capable of delivering electrical power to one or more electric motors disposed within one or more rotor housings, where the motors can drive the rotors. The VTOL aircraft can also include one or more sustainer energy/power sources capable of driving the motors should the energy stores fail or deplete. This document gives no information about an air blowing steering system.

Therefore, there remains a considerable need for methods, systems, and configurations for providing VTOL tilt- propeller aircraft.

### Summary of the invention

In view of the foregoing disadvantages or limitations of existing VTOL aircraft the present invention proposes an improved VTOL aircraft in the form of a winged electrically-powered vertical take-off and landing aircraft according to claim 1.

The VTOL aircraft according to the invention provides a much simpler and cost-effective solution than the VTOLs aircraft known from the prior art as it relies essentially on electrically powered tiltable propellers associated with an inventive air-blowing steering system at the tail of the aircraft to provide any necessary steering and/or control of the aircraft during stationary hovering phases, vertical take-off and landing phases as well as pitch steering of the aircraft to engage forward flying thereof. The aircraft of the invention thereby does not require use of complex, heavy and energy-consuming tilt-rotors assembly as known from other VTOLs or helicopters.

The aircraft of the invention therefore offers a simpler, more reliable and cost-effective design, making it a viable commercial solution, as opposed to existing aircraft of the kind, reserved for an up-market client range.

Preferably, the fan is of turbofan or turbojet type, i.e. it comprises an air turbine disposed in line with the fan ducted in an air conveying funnel arranged in the aircraft.

According to further preferred embodiments of the invention:
- the primary electrical energy source comprises a first rechargeable battery having at least 1 kW/kg power density and at least 150 W-h/kg usable energy density;
- the primary electrical energy source is repositionable within the cockpit of the aircraft for adjusting the centre of gravity thereof;
- the at least secondary energy source is selected from the group consisting of a second rechargeable battery having a usable energy density of at least 200 W-h/kg, a second rechargeable battery and a fuel driven electric generator that sequentially supply power, where the second rechargeable battery has a usable energy density of at least 200 W-h/kg, and a fuel driven engine with a generator,
- the at least secondary energy source comprises a second rechargeable battery having a usable energy density of at least 200 W-h/kg, such that the aircraft is configured to fly at least 370,4 km (200 nautical miles) at the cruise speed of up to 305,58 km/h (165 knots) and at an altitude of at least 1219,2 m (4'000 feet) using only the second rechargeable battery;
- the at least secondary energy source comprises a second rechargeable battery and a fuel driven electric generator that sequentially supply power, where the second rechargeable battery has a usable energy density of at least 200 W-h/kg, such that the aircraft is configured to fly at least 92,6 km (50 nautical miles) at the cruise speed of up to 305,58 km/h (165 knots) and at an altitude of at least 1219,2 m (4'000 feet) using only the second rechargeable battery, and at least 1203,8 km (650 nautical miles) at the cruise speed of 388,92 km/h (210 knots) and at an altitude of up to 5486,4 m (18'000 feet) using the fuel driven electric generator;
- the at least secondary energy source comprises a fuel driven engine with a generator, such that the aircraft is configured to fly up to 2222,4 km (1'200 nautical miles) at the cruise speed of up to 555,6 km/h (300 knots) and at an altitude of up to 11277,6 m (37'000 feet) using only the fuel driven engine with the generator;
- the at least secondary energy source is further configured to retain a preferred orientation relative to gravity as the first and second nacelles tilt.

The electrical VTOL aircraft of the invention is advantageously designed such that the electrical motors of the propeller units can support fail-over operation where a first motor can service a second motor's propeller while the second motor is inoperative. In such embodiments the aircraft can achieve HOGE with one propulsion motor inoperative (OPMI). The motors can be deployed within tiltable nacelles accommodating the propeller units, each nacelle having a corresponding propeller or multiple corresponding propellers. It is also contemplated that the nacelles could house one, two, or more additional redundant motors.

Various objects, features, aspects and advantages of the inventive subject matter will become more apparent from the following detailed description of preferred embodiments, along with the accompanying drawing figures in which like numerals represent like components.

### Description of drawings

FIG. 1-7 present various views of an electrical VTOL aircraft according to a preferred embodiment of the invention as a 2-seater aircraft;
FIG. 8 presents a longitudinal cross section of the electrical VTOL aircraft of figures 1-7 taken along a vertical plane containing a longitudinal axis of the cockpit of the aircraft

### Detailed description of preferred embodiments

The present invention pertains to an electrically driven VTOL tilt-propeller aircraft 1, which may be described and referred to in the following description under the acronym E-VTOL.

The E-VTOL aircraft 1 of the invention, an example of which is represented in the appended figures, exploits advanced electric propulsion technology together with highly efficient, autonomously piloted Vertical Take-Off and Landing (VTOL) systems with pilot override. The E-VTOL aircraft 1 of the invention has been developed by the inventors with the aim of bringing the VTOL capable aircraft to a completely new status and commercial relevance and viability thanks to a tilt-propeller design relying on electrical power as energy for driving tiltable propeller units. The E-VTOL aircraft 1 of the invention accordingly offers a safe, legal, and practical flying vehicle to operate within populated, built-up localities, and to achieve speeds and ranges competitive with current fixed wing, propeller-driven aircraft of the same payload class, while less efficient rotary wing aircraft (e.g., helicopters and compounds) innately show lower lift-to-drag ratios preventing them from competing with fixed-wing, propeller-driven aircraft in speed and range.

The inventive subject matter encompasses at least three fundamentally different electric propulsion architectures (e.g., purebred battery; light hybrid; and heavy, basing-independent hybrid, etc.) which, when mechanized on advanced, high-efficiency tilt-propeller vertical take-off and landing (VTOL) aircraft, substantially expand the performance envelope, safety, or basing options over that currently available with conventional helicopters, tiltrotor and fixed wing aircraft, be it electrically or combustion powered.

The significant differentiation of the tilt-propeller aircraft 1 of the present invention compared to regular tilt-rotor aircraft known from the prior art is the massively different way of steering.

Regular tilt-rotors have two or more rotors which take over all roll/pitch/yaw steering. The tilt-propeller aircraft 1 of the invention has a steering concept like a drone and is therefore a stable platform. Instead of rotors we only operate propellers 2 with pitch steering or not. This will allows a roll steering through different propeller speeds or different propeller blade angles. The roll and yaw steering of the aircraft 1 will be done by a fenestra, fan device 3 or with pressurized air that has been produced during travel at the tail 4 or everywhere on the aircraft to provide stable hover, a smooth translation to forward speed. In regular travel speed, the aircraft 1 will be steered like a regular plane with aerodynamic rudders in any kind of configuration.

Battery energy will provide energy to have a stable take off, hover and translation to travel speed for minimum of 3 minutes. As soon as the aircraft 1 reaches travel speed, the electric engines will be switched to generators that will be propelled by a fuel driven engine of any kind and produce the needed energy to a) supply the electricity to recharge the batteries for approach and landing operation and as well the energy for the propulsion electric engines on the nacelles or it can be used as well as a purebred electric VTOL.

Myriad high energy density batteries are currently available having a wide variety of applications. Such battery technologies can be adapted for use within the disclosed subject matter. Example batteries 6 can include the BA 5590 Li-O₂ battery produced by Saft Inc. having a specific energy density of 250 W-h/kg. Another example battery can include the BA 7847 Lithium-Manganese Dioxide battery having an energy density of 400 W-h/kg offered by Ultralife Batteries, Inc. It is also contemplated that Lithium-air exchangeable recyclable primary batteries based on Lithium perchloride could supply energy densities in excess of 1000 W-h/kg, where such batteries have a theoretical energy density greater than 3000 W-h/kg as discussed in "Lithium Primary Continues to Evolve" by Donald Georgi from the 42nd Power Sources Conference, June 2006. For example, it is also contemplated that automotive plug-in hybrid can be adapted for use with in the inventive subject matter. The batteries 6 representing the electrical energy store of the VTOL aircraft 1 can also be configured to be field-replaceable for ease of maintenance. Thus, a VTOL aircraft could carry one or more spare batteries 6', 6" that can be swapped with a failed or failing battery 6 in the field during a mission without requiring a maintenance facility.

The previously discussed propulsion systems can be applied to numerous types of aircraft markets. In a preferred embodiment, the propulsion systems can be directly applicable to rotary wing and fixed wing aircraft markets.

For example, general aviation (e.g., personal, light business, executive business, public safety, light military, light charter, and light cargo class with 1-14 total seats or at least 1'587 kg (3'500 lbs) payload) aircraft would benefit from such designs by reducing noise, emissions, or other undesirable characteristics. Additionally, unmanned aviation with a gross weight of less than 9'071 kg (20'000 lbs) could leverage the disclosed techniques.

One should appreciate that many other configurations for a driveline are possible, all of which are contemplated. Furthermore, one should note that the drivelines can lack cross shafts coupling the motors to the propeller, or lack a shifting gearbox as is typical in traditional combustion-based designs of efficient tilt propellers as opposed to inefficient tilt propeller aircraft (e.g., the V-22).

Combining the approaches outlined above for propulsion systems and drivelines confers many abilities or capabilities to the inventive E-VTOL aircraft 1. By providing the ability to safely achieve HOGE while under electrical power, contemplated E-VTOL aircraft 1 can be used or otherwise operate in built-up or populated arenas. The aircraft 1 has low levels of noise and low level emissions. An all-electric, quiet vertical propulsion system simply produces no unacceptable location emissions during vertical flight regime or initial climb.

An E-VTOL aircraft 1 based on the disclosed systems can provide for a market-viable purebred all-battery configuration, where the aircraft can have a range in excess of 370,4 km (200 nm) with a vertical ascent within three minutes. Such an aircraft can also have descent and powered vertical landing reserves of at least one minute.

A heavy hybrid having a battery-only range in excess of 92,6 km (50 nm) could operate locally to and from a logistically unsupported base. These bases are expected to provide electrical recharge energy to recharge the heavy hybrid's batteries.

Contemplated configurations also lack a requirement for a 2-speed gearbox normally required to efficiently match the large variation in required propeller RPM between hover and cruise operation modes due to poor turn- down fuel consumption of typical turbine-powered propeller with mechanical drive trains using fixed ratio gearboxes. Rather, the contemplated designs exploit the large turndown required in propeller RPM for cruise efficiency without a multi-speed gearbox.

The contemplated designs have safety exceeding that of conventional mechanical driveline rotary-wing aircraft. For example, the contemplated designs not only have a normal innate ability to provide safe auto-rotation upon loss of all drive power, the electrically propelled propellercraft hybrids can descend for controlled battery-powered hover or vertical landing after loss of a back-up and/or secondary energy/power source (e.g., larger batteries, fuel-cells, semi-cells, engine/generator, etc.). In a similar vein, hybrids can hover or land vertically using the back-up and/or secondary energy/power source should the batteries become debilitated. The electrically propelled purebred battery-powered tilt-propellers 2 or hybrid propellercraft in battery mode can perform powered hover or vertical landing after partial battery debilitation because the batteries can be split into sections for electrical isolation of a failed battery section. The same reasoning applies to elimination of the dead man's zone during take-off or landing, particularly in built-up areas.

Light propulsion motor weight (e.g., less than 0.21 kg/kW (0.35 lbs/shp) 4-minute output) allows for installation of at least two full-lift power propulsion motors per nacelle 21. In some embodiments, a nacelle could house at least three half-lift power propulsion motors in each propeller nacelle without requiring mechanical cross-shafting to share load while under OPMI during terminal operations. Such an approach is considered advantageous in conditions where the dead man's curve or auto-rotation creates unacceptable risk in built-up areas.

Contemplated E-VTOL aircraft 1 has altitude-independent maximum continuous power from electric propulsion limited by continuous power available from the batteries 6 or from back-up and/or secondary energy/power sources 6', 6". EVTOL aircraft lack a requirement for coupling propeller/propulsion motor RPM from a back-up and/or secondary RPM if such a back-up and/or secondary relies on rotating generators, thus simplifying design or implementation criteria. Additionally, the designs also eliminate a requirement for multiple axis thermal engine operation in hybrids, hence removing special design restrictions for multi-axis lubrication on typical nacelle mounted tilt rotor engines.

For operations in built-up areas with civilian personnel, the electric tilt-propeller aircraft 1 will, as with other rotary wing aircraft, keep disk loading below 73,2 kg/m² (15 lbs/sq. ft) for outwash velocity reasons and propeller tip speed below Mach 0.7 at sea level in a standard atmosphere for acoustic reasons. Such a configuration allows for achieving HOGE while generating less than 60 dB of sound as measured by an observer on the ground 457,2 m (1'500 feet) from the aircraft.

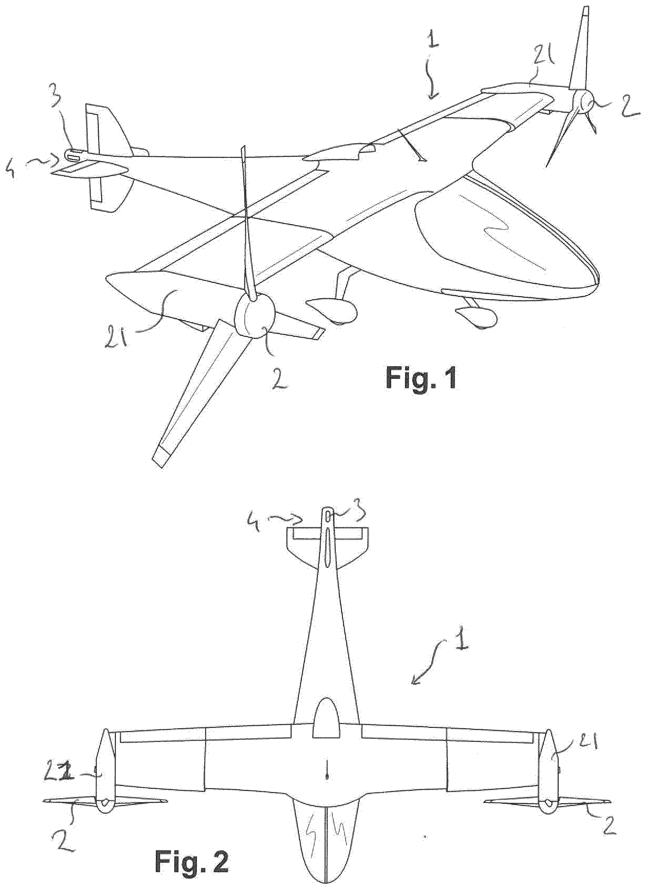

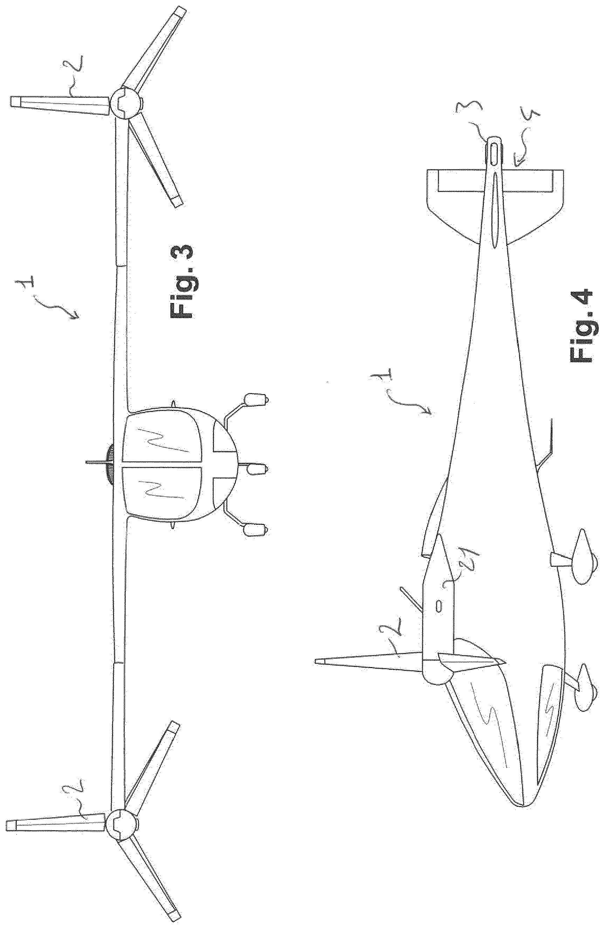

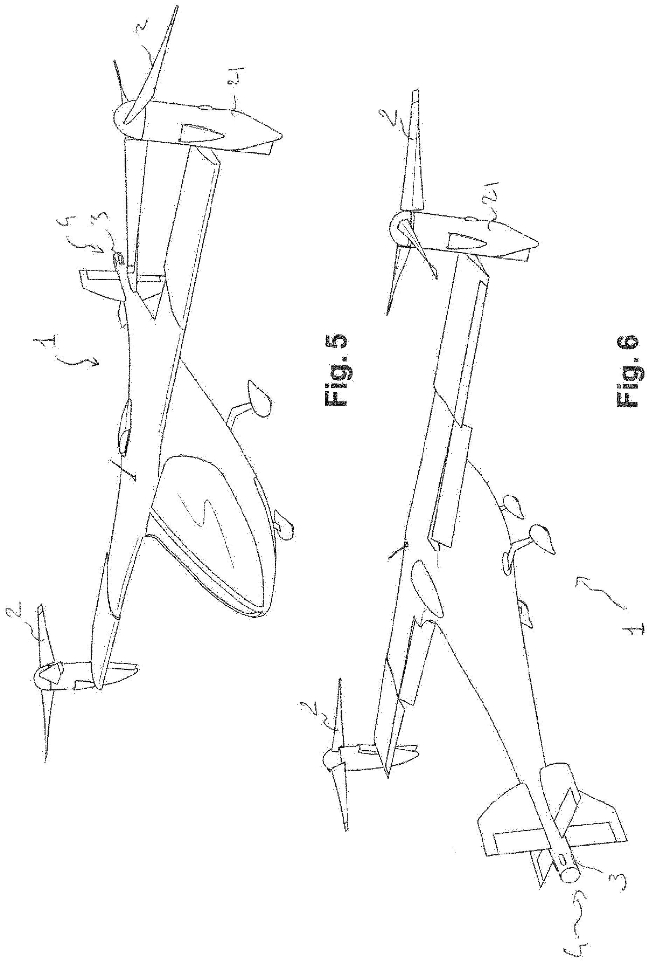

FIG. 1-7 show the layout of a 2-place, cabin class, and 748 kg (1'650 lb) gross weight tilt-propeller. The aircraft 1 is capable to hover OGE at 2'438 m (8'000 ft) at ISA +20°C and carry a payload of 181 kg (400 lb). Tilt-propeller aircraft is capable to hover for max. 8 min. (at today's battery technology) and accelerate up to 305,58 km/h (165 kt) travel speed for up to 3 hours endurance before again landing configuration can be met for 8 min. The big difference to regular tiltrotor, and electric tiltrotors is the fact that a tilt-propeller aircraft has only regular pitch-propellers (instead of rotors) and the steering is made by moving air at the specific requested place to become a stable hover configuration.

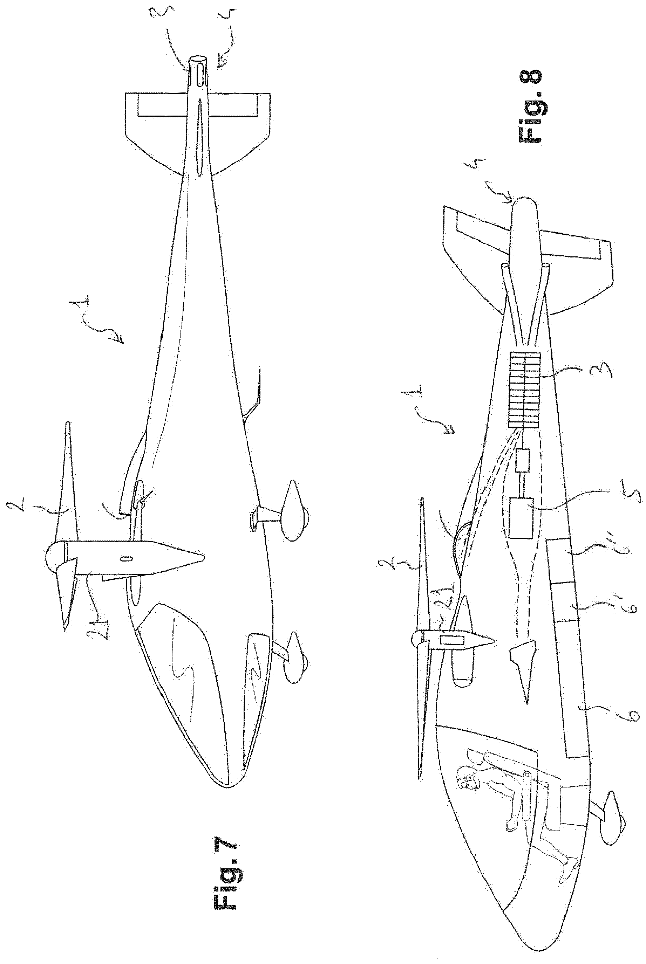

FIG. 8 presents the schematic working concept of the 2-seater. Clearly visible is the way we produce the tail 4 airflow to steer the aircraft. Using as well one or more electric engines that propel a fan 3 or fenestra that can be directed into different directions (up/down/right/left/forward/backward). Additionally the electric engine 5 that is driving the fan 3 is used as a generator during travel speed.

The disclosed inventive EVTOL aircraft 1 makes strides over known art by combining various subsystems in manners that achieve unexpected results. Ordinarily, designers would avoid using a plurality of electric drive motors within a VTOL aircraft due to the complexities of de-clutching such motors from a combining gearbox after motor failure. However, the applicants have appreciated that the benefits far outweigh the inefficiencies. The complete new way of steering makes the concept completely new. We do not rely on complex helicopter kind of rotors but on regular propellers and fans.

The inventive subject matter is considered to include at least three architectures of electrically driven vertical take-off and landing (VTOL) tilt-propeller aircraft which are (1) politically compatible in safety, noise, exhaust emissions, and outwash velocity with terminal operations (powered hovering, VTOL) in densely populated built-up areas, (2) market competitive in range and speed, with existing equivalent class, fixed-wing and rotary-wing aircraft, (3) basing-independent to a degree by reliance on electric energy recharge instead of entirely on on-board electrical generators using logistic fuels, and which are variously composed of previously demonstrated, independently vetted, aerodynamically efficient, lightweight airframes, efficient multi-RPM propellers, lightweight reduction gears - if any, high power density electric drive motors and generators, high energy and power density batteries, efficient lightweight engines and fuel cells, and autonomous flight management systems and multiple additional safety sensors that as well allow pilots independent flight like a drone today.

One should appreciate that presented concepts also allow for E-VTOL aircraft having the following characteristics as discussed above: An electric motor-driven, high aspect ratio (>12) tilt-propeller aircraft, with glide ratio ≥14, cruise propeller propulsive efficiency ≥0.85, empty weight fraction ≤0.50 (absent electrical energy/power package source) A plurality of electric drive motors for each propeller with each motor of sufficient power that one propulsion motor inoperative (OPMI) will not prevent hover-out-of-ground effect (HOGE) and will allow continued HOGE without the requirement for propulsion cross-shafting, For light- hybrid electric power train architecture, sufficient rechargeable electric energy storage (e.g., battery) at ≥ 150 W-h/kg (usable) to enable 8 minutes of take-off and climb and 8 minute of landing, all at HOGE power draw, and power capacity to execute 30 second vertical landing with half electrical energy storage inoperative, all without recourse to non-stored electrical back-up and/or secondary energy/power For heavy-hybrid electric power train architecture, sufficient rechargeable stored electric energy (e.g., battery) at ≥200 W-h/kg (usable) to enable ≥ 92,6 km (50 nm) range without recourse to non-stored electrical back-up and/or secondary energy/power For purebred electric power train architecture, sufficient rechargeable stored electric energy (e.g., battery) at ≥400 W-h/kg (usable) to enable, ≥ 370,4 km (200 nm) range with no non-stored electrical back-up and/or secondary energy incorporated in the power architecture Propeller tip velocity ≤0.7M, and Disk loading ≤ 73,2 kg/m² (15 lbs/sq. ft).

## Claims

1. A winged electrically-powered vertical take-off and landing aircraft (1), comprising:
- a cockpit having a longitudinal axis, and
- at least two wings extending each along an axis from the cockpit symmetrically with respect to said longitudinal axis of the cockpit, and
- at least one electrical propeller unit (2, 21) arranged on each of the wings, each of said propeller unit comprising an electrical motor and a propeller directly or indirectly linked to an arbor of the electrical motor so as to rotate about an axis of rotation, and
- each of said propeller (2) and/or at least part of the wings being tiltable in a vertical plane containing the propeller's axis of rotation with respect the axis of the wing on which it is arranged, and
- each of said propeller unit (2,21) being electrically connected to a primary electrical energy source (6) disposed in said cockpit,
- an air-blowing steering system comprising a fan (3) which is propelled by one or more electrical engines (5) and arranged at a tail (4) of the aircraft,
- at least one secondary electrical energy source (6', 6") configured to generate electricity to power the electric motors of the propeller units and/or at least partially recharge the primary electrical energy source, which is configured therefor,
wherein the air-blowing steering system comprises an air projection turret arranged with respect to the fan (3) so as to direct an air stream projected by the fan (3), the air projection turret being electrically adjustable in orientation with respect to the cockpit to steer the aircraft to blow air in a downward, upward, and left-right directions for stabilized hover, pitch steering and yaw steering of the aircraft.

2. The aircraft of claim 1, wherein the air-blowing steering system comprises an air turbine disposed in line with the fan (3) in an air conveying funnel arranged in the aircraft.

3. The aircraft according to any of claims 1 to 2, wherein the fan is a turbo-fan (3).

4. The aircraft of any of claims 1 to 3, wherein the primary electrical energy source comprises a first rechargeable battery (6) having at least 1 kW/kg power density and at least 150 W-h/kg usable energy density.

5. The aircraft of claim 4, wherein the primary electrical energy source (6) is repositionable within the cockpit of the aircraft for adjusting the centre of gravity thereof.

6. The aircraft of any of claims 1 to 5, wherein the at least one secondary energy source (6', 6") is selected from the group consisting of a second rechargeable battery having a usable energy density of at least 200 W-h/kg, a second rechargeable battery and a fuel driven electric generator that sequentially supply power, where the second rechargeable battery has a usable energy density of at least 200 W-h/kg, and a fuel driven engine with a generator.

7. The aircraft of any of claims 1 to 5, wherein the at least one secondary energy source (6', 6") comprises a second rechargeable battery having a usable energy density of at least 200 W-h/kg, such that the aircraft is configured to fly at least 370,4 km (200 nautical miles) at the cruise speed of up to 305,58 km/h (165 knots) and at an altitude of at least 1219,2 m (4'000 feet) using only the second rechargeable battery.

8. The aircraft of any of claims 1 to 5, wherein the at least one secondary energy source (6', 6") comprises a second rechargeable battery and a fuel driven electric generator that sequentially supply power, where the second rechargeable battery has a usable energy density of at least 200 W-h/kg, such that the aircraft is configured to fly at least 92,6 km (50 nautical miles) at the cruise speed of 305,58 km/h (165 knots) and at an altitude of at least 1219,2 m (4'000 feet) using only the second rechargeable battery, and at least 1203,8 km (650 nautical miles) at the cruise speed of up to 388,92 km/h (210 knots) and at an altitude of up to 5486,4 m (18'000 feet) using the fuel driven electric generator.

9. The aircraft of any one of claims 1 to 5, wherein the at least one secondary energy source (6', 6") comprises a fuel driven engine with a generator, such that the aircraft is configured to fly up to 2222,4 km (1'200 nautical miles) at the cruise speed of up to 555,6 km/h (300 knots) and at an altitude of up to 11277,6 m (37'000 feet) using only the fuel driven engine with the generator.

## Patentansprüche

1. Elektrisch angetriebenes, vertikal startendes und landendes Flugzeug (1) mit Flügeln, umfassend:
- ein Cockpit mit einer Längsachse, und
- mindestens zwei Flügeln, die sich jeweils entlang einer Achse vom Cockpit symmetrisch in Bezug auf die Längsachse des Cockpits erstrecken, und
- mindestens eine elektrische Propellereinheit (2, 21), die an jedem der Flügel angeordnet ist, wobei jede der Propellereinheiten einen Elektromotor und einen Propeller umfasst, der direkt oder indirekt mit einer Welle des Elektromotors gekoppelt ist, um sich um eine Drehachse zu drehen, und
- jeder der genannten Propeller (2) bzw. zumindest ein Teil der Flügel sind in einer vertikalen Ebene schwenkbar und enthalten die Drehachse des Propellers in Bezug auf die Achse des Flügels, auf dem er angeordnet ist, und
- jede der genannten Propellereinheiten (2, 21) ist elektrisch mit einer primären elektrischen Energiequelle (6) verbunden, die im Cockpit angeordnet ist,
- ein Luftblasen-Lenksystem mit einem Gebläse (3), das von einem oder mehreren Elektromotoren (5) angetrieben wird und an einem Heck (4) des Flugzeugs angeordnet ist,
- mindestens eine sekundäre elektrische Energiequelle (6', 6") konfiguriert zur Erzeugung von Strom, um die Elektromotoren der Propellereinheiten zu speisen bzw. die primäre elektrische Energiequelle, die dafür konfiguriert ist, zumindest teilweise aufzuladen,
wobei das Luftblasen-Lenksystem einen in Bezug auf das Gebläse (3) angeordneten Luftauswurfturm umfasst, um einen vom Gebläse (3) ausgestoßenen Luftstrom zu lenken, wobei der Luftauswurfturm in Bezug auf das Cockpit zur Steuerung des Flugzeugs elektrisch verstellbar ist, um Luft in eine Abwärts-, Aufwärts- und Links-Rechts-Richtung zu blasen und so einen stabilisierten Schwebeflug sowie eine Nick- und Giersteuerung des Flugzeugs zu erreichen.

2. Flugzeug nach Patentanspruch 1, wobei das Luftblasen-Lenksystem eine Luftturbine umfasst, die in einer Linie mit dem Gebläse (3) in einem im Flugzeug angeordneten Luftführungsschacht angeordnet ist.

3. Flugzeug nach einem der Patentansprüche von 1 bis 2, wobei es sich beim Gebläse um ein Turbogebläse (3) handelt.

4. Flugzeug nach einem der Patentansprüche von 1 bis 3, wobei die primäre elektrische Energiequelle eine erste wiederaufladbare Batterie (6) mit mindestens 1 kW/kg Leistungsdichte und mindestens 150 Wh/kg nutzbarer Energiedichte umfasst.

5. Flugzeug nach Patentanspruch 4, wobei die primäre elektrische Energiequelle (6) innerhalb des Cockpits des Flugzeugs verstellbar ist, um den Schwerpunkt des Flugzeugs selbst anzupassen.

6. Flugzeug nach einem der Patentansprüche von 1 bis 5, wobei mindestens eine sekundäre Energiequelle (6', 6") aus der Gruppe bestehend aus einer zweiten wiederaufladbaren Batterie mit einer nutzbaren Energiedichte von mindestens 200 Wh/kg, einer zweiten wiederaufladbaren Batterie und einem kraftstoffbetriebenen elektrischen Generator, die sequentiell Leistung liefern, ausgewählt wurden, wobei die zweite wiederaufladbare Batterie eine nutzbare Energiedichte von mindestens 200 Wh/kg aufweist und über einen kraftstoffbetriebenen Motor mit Generator verfügt.

7. Flugzeug nach einem der Patentansprüche von 1 bis 5, wobei mindestens eine sekundäre Energiequelle (6', 6") eine zweite wiederaufladbare Batterie mit einer nutzbaren Energiedichte von mindestens 200 Wh/kg umfasst, so dass das Flugzeug so konfiguriert ist, dass es mindestens 370,4 km (200 nautische Meilen) mit einer Reisegeschwindigkeit von bis zu 305,58 km/h (165 Knoten) und einer Höhe von mindestens 1.219,2 m (4.000 Fuß) unter der alleinigen Verwendung der zweiten wiederaufladbaren Batterie fliegen kann.

8. Flugzeug nach einem der Patentansprüche von 1 bis 5, wobei mindestens eine sekundäre Energiequelle (6', 6") eine zweite wiederaufladbare Batterie und einen treibstoffbetriebenen elektrischen Generator umfasst, der sequentiell Leistung liefert, wobei die zweite wiederaufladbare Batterie eine nutzbare Energiedichte von mindestens 200 Wh/kg hat, so dass das Flugzeug so konfiguriert ist, dass es mindestens 92,6 km (50 nautische Meilen) bei einer Reisegeschwindigkeit von 305,58 km/h (165 Knoten) und einer Höhe von mindestens 1.219,2 m (4.000 Fuß) unter der alleinigen Verwendung der zweiten wiederaufladbaren Batterie und mindestens 1.203,8 km (650 nautische Meilen) bei einer Reisegeschwindigkeit von bis zu 388,92 km/h (210 Knoten) und in einer Höhe von bis zu 5.486,4 m (18.000 Fuß) mit dem kraftstoffbetriebenen Elektrogenerator fliegen kann.

9. Flugzeug nach einem der Patentansprüche von 1 bis 5, wobei mindestens eine sekundäre Energiequelle (6', 6") einen kraftstoffbetriebenen Motor mit einem Generator umfasst, so dass das Flugzeug so konfiguriert ist, dass es 2.222,4 km (1.200 nautische Meilen) bei einer Reisegeschwindigkeit von bis zu 555,6 km/h (300 Knoten) und einer Höhe von bis zu 11.277,6 m (37.000 Fuß) mit lediglich dem kraftstoffbetriebenen Motor mit Generator fliegen kann.

## Revendications

1. Aéronef (1) à ailes, à décollage et atterrissage verticaux et à propulsion électrique, comprenant :
- un cockpit ayant un axe longitudinal, et
- au moins deux ailes s'étendant chacune le long d'un axe à partir du cockpit, symétriquement par rapport audit axe longitudinal du cockpit, et
- au moins une unité d'hélice électrique (2, 21) disposée sur chacune des ailes, chacune desdites unités d'hélice comprenant un moteur électrique et une hélice liée directement ou indirectement à un arbre du moteur électrique, de manière à tourner autour d'un axe de rotation, et
- chacune de ladite hélice (2) et / ou au moins une partie des ailes étant inclinable dans un plan vertical contenant l'axe de rotation de l'hélice par rapport à l'axe de l'aile sur laquelle elle est disposée, et
- chacune desdites unités d'hélice (2, 21) étant connectée électriquement à une source d'énergie électrique primaire (6) disposée dans ledit cockpit,
- un système de direction par soufflage d'air comprenant un ventilateur (3) qui est propulsé par un ou plusieurs moteurs électriques (5) et disposé au niveau d'une queue (4) de l'aéronef,
- au moins une source d'énergie électrique secondaire (6', 6") configurée pour générer de l'électricité pour alimenter les moteurs électriques des unités d'hélice et / ou recharger au moins partiellement la source d'énergie électrique primaire, qui est configurée pour cela,
dans lequel le système de direction par soufflage d'air comprend une tourelle de projection d'air disposée par rapport au ventilateur (3) de manière à diriger un flux d'air projeté par le ventilateur (3), la tourelle de projection d'air étant réglable électriquement en orientation par rapport au cockpit pour diriger l'aéronef afin de souffler de l'air dans une direction vers le bas, vers le haut et de gauche à droite pour un vol stationnaire stabilisé, une direction en tangage et une direction en lacet de l'aéronef.

2. Aéronef selon la revendication 1, dans lequel le système de direction par soufflage d'air comprend une turbine à air disposée en ligne avec le ventilateur (3) dans un entonnoir de convoyage d'air disposé dans l'aéronef.

3. Aéronef selon l'une quelconque des revendications 1 à 2, dans lequel le ventilateur est un turbo-ventilateur (3) .

4. Aéronef selon l'une quelconque des revendications 1 à 3, dans lequel la source d'énergie électrique primaire comprend une première batterie rechargeable (6) ayant une densité de puissance d'au moins 1 kW / kg et une densité d'énergie utilisable d'au moins 150 W-h / kg.

5. Aéronef selon la revendication 4, dans lequel la source d'énergie électrique primaire (6) est repositionnable dans le cockpit de l'aéronef pour ajuster le centre de gravité de celui-ci.

6. Aéronef selon l'une quelconque des revendications 1 à 5, dans lequel ladite au moins une source d'énergie secondaire (6', 6") est choisie dans le groupe constitué d'une seconde batterie rechargeable ayant une densité d'énergie utilisable d'au moins 200 W-h / kg, d'une seconde batterie rechargeable et d'un générateur électrique à carburant qui fournissent séquentiellement de l'énergie, où la seconde batterie rechargeable a une densité d'énergie utilisable d'au moins 200 W-h / kg, et d'un moteur à carburant avec un générateur.

7. Aéronef selon l'une quelconque des revendications 1 à 5, dans lequel ladite au moins une source d'énergie secondaire (6', 6") comprend une seconde batterie rechargeable ayant une densité d'énergie utilisable d'au moins 200 W-h / kg, de sorte que l'aéronef est configuré pour voler sur au moins 370, 4 km (200 miles nautiques) à la vitesse de croisière pouvant aller à 305,58 km / h (165 nœuds) et à une altitude d'au moins 1 219,2 m (4 000 pieds) en utilisant uniquement la seconde batterie rechargeable.

8. Aéronef selon l'une quelconque des revendications 1 à 5, dans lequel ladite au moins une source d'énergie secondaire (6', 6") comprend une seconde batterie rechargeable et un générateur électrique à carburant qui fournissent séquentiellement de l'énergie, où la seconde batterie rechargeable a une densité d'énergie utilisable d'au moins 200 W-h / kg, de sorte que l'aéronef soit configuré pour voler sur au moins 92,6 km (50 miles nautiques) à la vitesse de croisière de 305,58 km / h (165 nœuds) et à une altitude d'au moins 1 219,2 m (4 000 pieds) en utilisant uniquement la seconde batterie rechargeable, et sur au moins 1 203, 8 km (650 miles nautiques) à une vitesse de croisière pouvant atteindre 388,92 km / h (210 nœuds) et à une altitude pouvant aller à 5486,4 m (18 000 pieds) en utilisant le générateur électrique alimenté en carburant.

9. Aéronef selon l'une quelconque des revendications 1 à 5, dans lequel ladite au moins une source d'énergie secondaire (6', 6") comprend un moteur à carburant avec un générateur, de sorte que l'aéronef soit configuré pour voler jusqu'à 2 222,4 km (1 200 miles nautiques) à la vitesse de croisière pouvant atteindre 555,6 km/h (300 nœuds) et à une altitude allant jusqu'à 11 277,6 m (37 000 pieds) en utilisant uniquement le moteur à carburant avec le générateur.
